# EUROPÄISCHE PATENTANMELDUNG

(11) **EP 3 441 899 A1**
(43) Veröffentlichungstag der Anmeldung: **13.02.2019**
(21) Anmeldenummer: 17185745.1
(22) Anmeldetag: 10.08.2017
(51) Int. Cl.: G06F 21/31, G07C 9/00, G06F 21/42, H04L 9/08, H04W 12/06

(54) **VERFAHREN, SYSTEM UND COMPUTERPROGRAMMPRODUKT ZUM ZUGREIFEN AUF EINE GESCHÜTZTE EINRICHTUNG MIT EINER ZUGRIFFSEINRICHTUNG SOWIE GESCHÜTZTE EINRICHTUNG**

(71) Anmelder: Siemens Aktiengesellschaft, 80333 München (DE)
(72) Erfinder: Gessner, Jürgen, 85661 Forstinning (DE); Zwanzger, Johannes, 85579 Neubiberg (DE)

(57) **Zusammenfassung**

Es wird ein Verfahren zum Zugreifen auf eine geschützte Einrichtung mit einer Zugriffseinrichtung vorgeschlagen, mit:
Erzeugen von Zugriffsdaten in der geschützten Einrichtung, wobei die Zugriffsdaten in der geschützten Einrichtung für einen vorbestimmten Zeitraum gültig sind, während der ein Zugriff der Zugriffseinrichtung auf die geschützte Einrichtung ermöglicht wird, falls die Zugriffseinrichtung der geschützten Einrichtung Berechtigungsdaten bereitstellt, die die Zugriffsdaten übermitteln;
Erstellen der Berechtigungsdaten zum Übermitteln der Zugriffsdaten durch eine Autorisierungseinrichtung;
Übertragen der Berechtigungsdaten an die geschützte Einrichtung;
Ermitteln, ob die mit den Berechtigungsdaten übermittelten Zugriffsdaten in der geschützten Einrichtung gültig sind; und
Zugreifen auf die geschützte Einrichtung mit der Zugriffseinrichtung, falls ermittelt wird, dass die mit den Berechtigungsdaten übermittelten Zugriffsdaten in der geschützten Einrichtung gültig sind.

Ein Zugriff auf eine geschützte Einrichtung wird zeitlich limitiert zugelassen, wodurch die Sicherheit der geschützten Einrichtung erhöht wird.

## Beschreibung

Die vorliegende Erfindung betrifft ein Verfahren, ein System und ein Computerprogrammprodukt zum Zugreifen auf eine geschützte Einrichtung mit einer Zugriffseinrichtung, sowie eine geschützte Einrichtung.

Eine Zugriffseinrichtung kann einen Zugriff oder Zugang auf eine geschützte Einrichtung benötigen, zum Beispiel um ein Betriebssystem der geschützten Einrichtung zu aktualisieren. Es besteht der Bedarf, den Zugriff der Zugriffseinrichtung auf die geschützte Einrichtung nur zeitlich limitiert zu erlauben, um die Sicherheit der geschützten Einrichtung nicht zu gefährden.

Vor diesem Hintergrund besteht eine Aufgabe der vorliegenden Erfindung darin, einen verbesserten Zugriff auf eine geschützte Einrichtung mit einer Zugriffseinrichtung zu schaffen.

Demgemäß wird ein Verfahren zum Zugreifen auf eine geschützte Einrichtung mit einer Zugriffseinrichtung vorgeschlagen. Das Verfahren umfasst:
Erzeugen von Zugriffsdaten in der geschützten Einrichtung, wobei die Zugriffsdaten in der geschützten Einrichtung für einen vorbestimmten Zeitraum gültig sind, während der ein Zugriff der Zugriffseinrichtung auf die geschützte Einrichtung ermöglicht wird, falls die Zugriffseinrichtung der geschützten Einrichtung Berechtigungsdaten bereitstellt, die die Zugriffsdaten übermitteln;
Bereitstellen der Zugriffsdaten an eine Autorisierungseinrichtung;
Erstellen der Berechtigungsdaten zum Übermitteln der Zugriffsdaten durch die Autorisierungseinrichtung;
Übertragen der Berechtigungsdaten von der Autorisierungseinrichtung an die Zugriffseinrichtung;
Übertragen der Berechtigungsdaten von der Zugriffseinrichtung an die geschützte Einrichtung;
Ermitteln, ob die mit den Berechtigungsdaten übermittelten Zugriffsdaten in der geschützten Einrichtung gültig sind; und
Zugreifen auf die geschützte Einrichtung mit der Zugriffseinrichtung, falls ermittelt wird, dass die mit den Berechtigungsdaten übermittelten Zugriffsdaten in der geschützten Einrichtung gültig sind.

Die geschützte Einrichtung kann ein Computer, eine Speichereinrichtung, ein Feldgerät oder dergleichen sein. Die Zugriffseinrichtung kann eine Einrichtung sein, die einen Zugriff auf die geschützte Einrichtung benötigt. Die Zugriffseinrichtung kann ein Computer, eine Servereinrichtung oder eine Person, insbesondere ein Techniker, sein. Der Zugriff auf die geschützte Einrichtung kann im Rahmen einer Aktualisierung, einer Reparatur, einer Konfigurierung und/oder eines Backups der geschützten Einrichtung erforderlich sein.

Der Zugriff auf die geschützte Einrichtung ist insbesondere zeitlich begrenzt. Hierzu kann den Zugriffsdaten ein vorbestimmter Zeitraum zugordnet sein, während dem der Zugriff auf die geschützte Einrichtung erlaubt werden kann. Der vorbestimmte Zeitraum ist beispielsweise eine Stunde, ein Tag oder eine Woche.

Die Zugriffsdaten sind zum Beispiel ab ihrer Erzeugung für den vorbestimmten Zeitraum gültig. Die Zugriffsdaten können eine Zahl, insbesondere eine Zufallszahl, sein. Die erzeugten Zugriffsdaten sind insbesondere nicht geheim. Sie können zum Beispiel auf einem Bildschirm der geschützten Einrichtung angezeigt werden.

Die Zugriffsdaten können nach Ablauf des vorbestimmten Zeitraums ungültig werden. Sie können dann gelöscht werden oder als veraltete Zugriffsdaten in einem Speicher der geschützten Einrichtung gespeichert werden.

Die erzeugten Zugriffsdaten können z.B. durch die Zugriffseinrichtung oder die Autorisierungseinrichtung ausgelesen werden. Die Autorisierungseinrichtung kann die Zugriffsdaten erhalten und Berechtigungsdaten erzeugen, die die Zugriffsdaten wiedergeben. Insbesondere sind die Zugriffsdaten in den Berechtigungsdaten eingebettet. Die Berechtigungsdaten können den Zugriff der Zugriffseinrichtung auf die geschützte Einrichtung ermöglichen, falls die mit den Berechtigungsdaten übermittelten Zugriffsdaten in der geschützten Einrichtung gültig sind.

Die Berechtigungsdaten können der Zugriffseinrichtung bereitgestellt werden. Die Zugriffseinrichtung kann die Berechtigungsdaten nutzen, um auf die geschützte Einrichtung zugreifen zu können. Hierzu kann die Zugriffseinrichtung die Berechtigungsdaten an die geschützte Einrichtung übermitteln.

Die empfangenen Zugriffsdaten sind insbesondere gültig, falls sie mit den in der sicheren Einrichtung erzeugten Zugriffsdaten übereinstimmen, und falls sie in Bezug auf den vorbestimmten Zeitraum noch gültig sind.

Die geschützte Einrichtung prüft insbesondere, ob die mit den Berechtigungsdaten übermittelten Zugriffsdaten zeitlich noch gültig sind. Die geschützte Einrichtung prüft insbesondere, ob ein Zeitpunkt, zu dem die Berechtigungsdaten empfangen werden, vor dem Ende des vorbestimmten Zeitraums liegt, zu welchem die Zugriffsdaten ungültig werden. Ferner kann die geschützte Einrichtung die Zugriffsdaten aus den empfangenen Berechtigungsdaten extrahieren und prüfen, ob die extrahierten Zugriffsdaten mit den Zugriffsdaten übereinstimmen, die in der geschützten Einrichtung gültig sind.

Falls die mit den Berechtigungsdaten empfangenen Zugriffsdaten in der geschützten Einrichtung gültig sind, kann ein Zugriff der Zugriffseinrichtung auf die geschützte Einrichtung durch die geschützte Einrichtung zugelassen werden. In diesem Fall kann die Zugriffseinrichtung auf die geschützte Einrichtung zugreifen und diese z.B. aktualisieren.

Falls die mit den Berechtigungsdaten empfangenen Zugriffsdaten in der geschützten Einrichtung nicht gültig sind, z.B. wenn die Zugriffsdaten nach Ablauf des vorbestimmten Zeitraums empfangen werden, kann ein Zugriff der Zugriffseinrichtung auf die geschützte Einrichtung durch die geschützte Einrichtung verboten werden. In diesem Fall kann die Zugriffseinrichtung nicht auf die geschützte Einrichtung zugreifen und die geschützte Einrichtung kann z.B. nicht durch die Zugriffseinrichtung aktualisiert werden.

Die geschützte Einrichtung kann der Zugriffseinrichtung den Zugriff insbesondere nur während des vorbestimmten Zeitraums gewähren. Dadurch wird verhindert, dass eine Zugriffseinrichtung, der der Zugriff auf die geschützte Einrichtung einmal gewährt wurde, anschließend wiederholt auf die geschützte Einrichtung zugreifen kann. Dadurch kann die Sicherheit der geschützten Einrichtung erhöht werden. Eine Manipulation der geschützten Einrichtung durch die Zugriffseinrichtung kann zudem verhindert werden.

Ferner kann die Autorisierungseinrichtung vorzugsweise nur Berechtigungsdaten ausstellen, die sofort nutzbar sind. Es können insbesondere keine Berechtigungsdaten ausgestellt werden, die einen Zugriff der Zugriffseinrichtung auf die geschützte Einrichtung in der fernen Zukunft autorisieren. Der Zugriff der Zugriffseinrichtung auf die geschützte Einrichtung kann kontrolliert erfolgen, wodurch die Sicherheit der geschützten Einrichtung erhöht werden kann.

Gemäß einer Ausführungsform sind die Zugriffsdaten als eine Zufallszahl, insbesondere als eine echte Zufallszahl, ausgebildet.

Die geschützte Einrichtung kann zum Erzeugen der Zufallszahl einen Zufallszahlengenerator aufweisen. Die erzeugten Zufallszahlen können echte, physikalische Zufallszahlen sein, die mit Hilfe physikalischer Phänomene erzeugt werden. Alternativ können die Zufallszahlen auch Pseudozufallszahlen sein, die mit Hilfe eines Algorithmus durch die geschützte Einrichtung erzeugt werden. Die Zufallszahl hat insbesondere eine Länge von mindestens 128 Bits.

Zufallszahlen als Zugriffsdaten zu verwenden ist besonders vorteilhaft, weil in der Zukunft liegende Zugriffsdaten somit nicht ausgerechnet werden können. Ein böswilliger Nutzer, der in der Zukunft einen Zugriff auf die geschützte Einrichtung gewinnen will, kann insbesondere keine für die Zukunft zulässigen Berechtigungsdaten erzeugen. Dadurch, dass die Zugriffsdaten als eine Zufallszahl ausgebildet sind, kann insbesondere sichergestellt werden, dass nur Berechtigungsdaten für einen sofortigen Zugriff bis zum Ablauf der Gültigkeit der Zugriffsdaten auf die geschützte Einrichtung erzeugt werden können.

Gemäß einer weiteren Ausführungsform hat die geschützte Einrichtung keine regelmäßige und/oder dauerhafte Verbindung zur Außenwelt, insbesondere keine Netzwerkverbindung, und/oder keinen Zugriff auf eine aktuelle Uhrzeit.

Die geschützte Einrichtung kann als eine einzelne Einrichtung vorgesehen sein, die insbesondere nicht permanent über das Internet oder über ein Netzwerk mit anderen Einrichtungen Daten austauschen kann. In Ausführungsformen hat die geschützte Einrichtung nur eine Schnittstelle, die einen Datenaustausch mit der Zugriffseinrichtung ermöglicht.

Insbesondere steht der geschützten Einrichtung keine aktuelle, "sichere" Zeit zur Verfügung, die einen zeitlich begrenzten Zugriff der Zugriffseinrichtung auf die geschützte Einrichtung definieren könnte. Der zeitlich begrenzt Zugriff auf die geschützte Einrichtung kann hier durch den vorbestimmten Zeitraum bestimmt werden.

Gemäß einer weiteren Ausführungsform umfasst das Verfahren ferner:
Unterbinden des Zugriffs auf die geschützte Einrichtung mit der Zugriffseinrichtung, falls ermittelt wird, dass die mit den Berechtigungsdaten übermittelten Zugriffsdaten in der geschützten Einrichtung nicht mehr gültig sind.

In Ausführungsformen kann die geschützte Einrichtung ferner ein Warnsignal ausgeben, falls die mit den Berechtigungsdaten übermittelten Zugriffsdaten in der geschützten Einrichtung nicht mehr gültig sind.

Gemäß einer weiteren Ausführungsform umfasst das Verfahren ferner:
Signieren der Berechtigungsdaten beim Erstellen der Berechtigungsdaten durch die Autorisierungseinrichtung.

Die Berechtigungsdaten können mit einer digitalen Signatur oder einem digitalen Message Authentication Code durch die Autorisierungseinrichtung signiert oder authentisiert werden. Beim Empfang der Berechtigungsdaten kann die geschützte Einrichtung die digitale Signatur oder den Message Authentication Code prüfen, um sicherzustellen, dass die Berechtigungsdaten authentisch sind und/oder tatsächlich durch die Autorisierungseinrichtung erzeugt wurden.

Gemäß einer weiteren Ausführungsform werden die Berechtigungsdaten in einem asymmetrischen Signaturverfahren, in einem asymmetrischen Verschlüsselungsverfahren, in einem symmetrischen Nachrichtenauthentisierungsverfahren und/oder in einem symmetrischen Verschlüsselungsverfahren erstellt.

In dem asymmetrischen Signaturverfahren kann die Ausstellereinrichtung die Berechtigungsdaten mit einem privaten Schlüssel kryptographisch sicher signieren. Die geschützte Einrichtung kann mit einem korrespondierenden öffentlichen Schlüssel die Signatur der Berechtigungsdaten verifizieren.

In dem asymmetrischen Verschlüsselungsverfahren kann die Ausstellereinrichtung die Berechtigungsdaten mit einem öffentlichen Schlüssel kryptographisch verschlüsseln. Die geschützte Einrichtung kann mit einem korrespondierenden privaten Schlüssel die Berechtigungsdaten entschlüsseln.

In dem asymmetrischen Signaturverfahren und/oder Verschlüsselungsverfahren ist es insbesondere nicht notwendig, in der geschützten Einrichtung geheime oder private Schlüssel zu speichern, sondern lediglich den beschriebenen öffentlichen Schlüssel.

Zum Authentisieren oder Verschlüsseln der Berechtigungsdaten in einem symmetrischen Nachrichtenauthentisierungsverfahren und/oder Verschlüsselungsverfahren kann bereits vor der Verschlüsselung sowohl in der Ausstellereinrichtung als auch in der geschützten Einrichtung ein symmetrischer Schlüssel gespeichert werden.

Bei einem symmetrischen Nachrichtenauthentisierungsverfahren kann für die Berechtigungsdaten in der Ausstellereinrichtung mit dem symmetrischen Schlüssel ein Message Authentication Code berechnet und in der geschützten Einrichtung mit dem symmetrischen Schlüssel nachgerechnet werden.

Bei einem symmetrischen Verschlüsselungsverfahren können die Berechtigungsdaten in der Ausstellereinrichtung mit dem symmetrischen Schlüssel verschlüsselt, und in der geschützten Einrichtung mit dem symmetrischen Schlüssel entschlüsselt werden.

Gemäß einer weiteren Ausführungsform umfasst das Verfahren ferner:
periodisches Erzeugen der Zugriffsdaten in der geschützten Einrichtung.

Die Zugriffsdaten können automatisch periodisch erzeugt werden, sodass neue oder aktuelle Zugriffsdaten nach Ablauf einer vorbestimmten Periode veraltete Zugriffsdaten ersetzen. Die vorbestimmte Periode kann dem vorbestimmten Zeitraum entsprechen. Bei Ablauf des vorbestimmten Zeitraums können beispielsweise neue Zugriffsdaten erzeugt werden, die wiederum für den vorbestimmten Zeitraum gültig sind.

Gemäß einer weiteren Ausführungsform umfasst das Verfahren ferner:
Erzeugen der Zugriffsdaten bei Empfang eines Erzeugungsbefehls in der geschützten Einrichtung.

Die Zugriffsdaten, die für den vorbestimmten Zeitraum gültig sind, können auch auf Anfrage, bei Empfang des Erzeugungsbefehls, erzeugt werden. Der Erzeugungsbefehl kann zum Beispiel durch einen Nutzer, der einen Knopf an der geschützten Einrichtung zum Erzeugen von Zugriffsdaten drückt, ausgelöst werden. Insbesondere können Zugriffsdaten vor Ablauf des vorbestimmten Zeitraums bei Empfang des Erzeugungsbefehls weitergeschaltet werden und durch neue Zugriffsdaten ersetzt werden. Durch das Erzeugen von Zugriffsdaten bei Empfang des Erzeugungsbefehls kann sichergestellt werden, dass die neuen erzeugten Zugriffsdaten wirklich für den gesamten vorbestimmten Zeitraum gültig sind. In Ausführungsformen wird durch das Erzeugen von Zugriffsdaten bei Empfang des Erzeugungsbefehls ferner sichergestellt, dass bisher gültige Zugriffsdaten sofort ungültig werden.

Gemäß einer weiteren Ausführungsform umfasst das Verfahren ferner:
Übermitteln einer die Zugriffsdaten umfassenden Autorisierungsanfrage von der Zugriffseinrichtung an die Autorisierungseinrichtung zum Erstellen der Berechtigungsdaten.

Die Autorisierungseinrichtung kann auf Anfrage der Zugriffseinrichtung mit der Autorisierungsanfrage die Zugriffsdaten erzeugen.

Gemäß einer weiteren Ausführungsform enthalten die Berechtigungsdaten Zugriffseinrichtungsdaten, die angeben, für welche Zugriffseinrichtung die Berechtigungsdaten geeignet sind, und das Verfahren umfasst ferner:
Übermitteln von Ausweisdaten der Zugriffseinrichtung an die geschützt Einrichtung;
Ermitteln, ob die Ausweisdaten mit den Zugriffseinrichtungsdaten übereinstimmen; und
falls ermittelt wird, dass die Ausweisdaten nicht mit den Zugriffseinrichtungsdaten übereinstimmen, Unterbinden des Zugriffs auf die geschützte Einrichtung mit der Zugriffseinrichtung.

Die Autorisierungsanfrage kann zugriffseinrichtungsbezogene Zugriffseinrichtungsdaten umfassen, die die Autorisierungseinrichtung in die Zugriffsdaten einbettet. Bei Empfang der Zugriffsdaten kann die geschützte Einrichtung anhand der eingebetteten Zugriffseinrichtungsdaten durch einen Vergleich mit den Ausweisdaten prüfen, ob die Zugriffseinrichtung eine zugelassene oder vertrauenswürdige Zugriffseinrichtung ist, und dementsprechend bestimmen, ob der Zugriffseinrichtung der Zugriff gewährt werden darf.

Gemäß einer weiteren Ausführungsform umfasst das Verfahren ferner:
Speichern einer Zulässigkeitsliste in der geschützten Einrichtung, die angibt, welche Autorisierungseinrichtungen für die geschützte Einrichtung zulässige Berechtigungsdaten erstellen dürfen;
Ermitteln, in der geschützten Einrichtung, ob die Berechtigungsdaten von einer Autorisierungseinrichtung aus der Zulässigkeitsliste erstellt wurden; und
Unterbinden des Zugriffs auf die geschützte Einrichtung mit der Zugriffseinrichtung, falls ermittelt wird, dass Berechtigungsdaten nicht von einer Autorisierungseinrichtung aus der Zulässigkeitsliste erstellt wurden.

Die Zulässigkeitsliste enthält insbesondere eine Liste von Autorisierungseinrichtungen, die von der geschützten Einrichtung als zulässig erachtete Berechtigungsdaten erstellen dürfen. Die Zulässigkeitsliste kann beispielsweise eine URL ("uniform resource locator"), eine URI ("uniform resource identifier"), eine IP-Adresse oder ein Zertifikat mit dem Public Key der zulässigen Autorisierungseinrichtungen umfassen.

Beim Erzeugen der Berechtigungsdaten kann diesen eine Information über die erzeugende Autorisierungseinrichtung zugeordnet werden. Die geschützte Einrichtung kann beim Empfang der Berechtigungsdaten überprüfen, ob die den Berechtigungsdaten zugeordnete Information über die erzeugende Autorisierungseinrichtung in der Zulässigkeitsliste vorliegt oder nicht.

Gemäß einem weiteren Aspekt wird eine geschützte Einrichtung vorgeschlagen, welche umfasst:
eine Erzeugungseinrichtung zum Erzeugen von Zugriffsdaten, die in der geschützten Einrichtung eine vorbestimmte zeitliche Gültigkeit haben, während der ein Zugriff der Zugriffseinrichtung auf die geschützte Einrichtung ermöglicht wird, falls die Zugriffseinrichtung der geschützten Einrichtung Berechtigungsdaten bereitstellt, die die Zugriffsdaten übermitteln;
eine Bereitstelleinrichtung zum Bereitstellen der Zugriffsdaten;
eine Empfangseinrichtung zum Empfangen der Berechtigungsdaten von der Zugriffseinrichtung;
eine Überprüfungseinrichtung zum Überprüfen, ob die mit den Berechtigungsdaten übermittelten Zugriffsdaten in der geschützten Einrichtung gültig sind; und
eine Zugriffsgestattungseinrichtung, die einen Zugriff auf die geschützte Einrichtung durch die Zugriffseinrichtung zulässt, falls die mit den Berechtigungsdaten übermittelten Zugriffsdaten in der geschützten Einrichtung gültig sind.

Die Bereitstelleinrichtung ist beispielsweise ein Display oder ein Lautsprecher.

Gemäß einem weiteren Aspekt wird ein System zum Zugreifen auf die zuvor beschriebene geschützte Einrichtung mit einer Zugriffseinrichtung vorgeschlagen, wobei das System die geschützte Einrichtung, die Zugriffseinrichtung und die Autorisierungseinrichtung umfasst,
wobei die Autorisierungseinrichtung geeignet ist, die Berechtigungsdaten zu erzeugen; und
wobei die Zugriffseinrichtung geeignet ist, die durch die Ausstellereinrichtung erzeugten Berechtigungsdaten zu empfangen und an die geschützte Einrichtung zu übertragen.

Gemäß einer Ausführungsform ist das System zudem geeignet, das zuvor und im Folgenden beschriebene Verfahren durchzuführen.

Die für das vorgeschlagene Verfahren beschriebenen Ausführungsformen und Merkmale gelten für das vorgeschlagene System entsprechend.

Gemäß einem weiteren Aspekt wird ein Computerprogrammprodukt vorgeschlagen, welches auf einer programmgesteuerten Einrichtung die Durchführung des zuvor und im Folgenden beschriebenen Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele. Im Weiteren werden das System, das Verfahren, das Computerprogrammprodukt und die geschützte Einrichtung anhand von bevorzugten Ausführungsformen unter Bezugnahme auf die beigelegten Figuren näher erläutert.
Fig. 1 zeigt ein ausführungsgemäßes System zum Zugreifen auf eine geschützte Einrichtung mit einer Zugriffseinrichtung;
Fig. 2 zeigt eine ausführungsgemäße geschützte Einrichtung;
Fig. 3 zeigt ein Verfahren zum Zugreifen auf eine geschützte Einrichtung mit einer Zugriffseinrichtung gemäß einer ersten Ausführungsform;
Fig. 4 zeigt ein Verfahren zum Zugreifen auf eine geschützte Einrichtung mit einer Zugriffseinrichtung gemäß einer zweiten Ausführungsform; und
Fig. 5 zeigt einen Zeitstrahl, der ein Erzeugen von Zugriffsdaten in einer geschützten Einrichtung angibt.

In den Figuren sind gleiche oder funktionsgleiche Elemente mit denselben Bezugszeichen versehen worden, sofern nichts anderes angegeben ist.

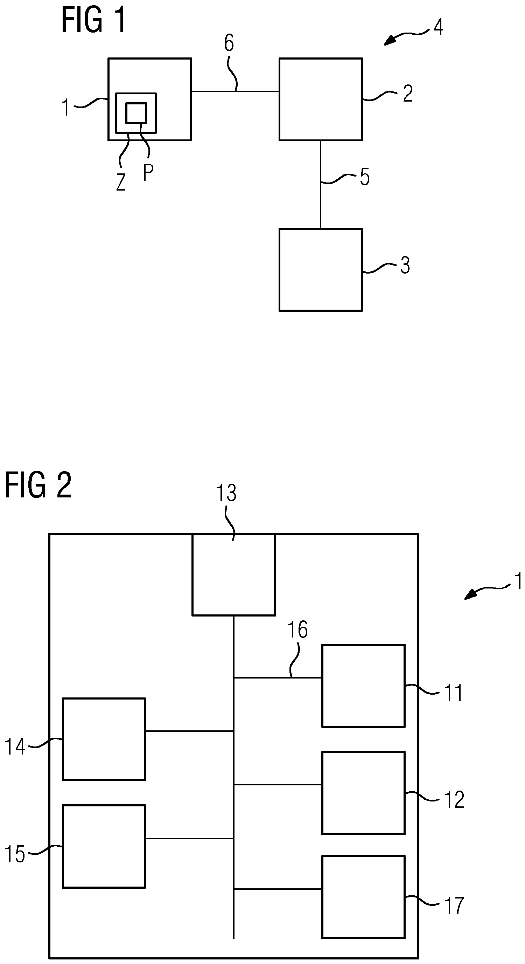

Die Fig. 1 zeigt ein ausführungsgemäßes System 4 zum Zugreifen auf eine geschützte Einrichtung 1 mit einer Zugriffseinrichtung 2. Das System 4 umfasst die geschützte Einrichtung 1, die Zugriffseinrichtung 2 und eine Autorisierungseinrichtung 3, die über ein Kabel 5 mit der Zugriffseinrichtung 2 verbunden ist. In weitere Ausführungsformen ist die Zugriffseinrichtung 2 über ein Netzwerk, insbesondere über das Internet, oder über eine kabellose Verbindung, wie zum Beispiel WLAN, mit der Autorisierungseinrichtung 3 verbunden.

Die geschützte Einrichtung 1 ist ein Schlüsselspeicher zum Speichern von geheimen Schlüsseln. Der Schlüsselspeicher 1 ist ein isolierter Speicher, der keine Verbindung zu anderen Geräten hat. Ferner hat der Schlüsselspeicher 1 keinen Zugriff auf eine aktuelle Uhrzeit. Der Schlüsselspeicher 1 umfasst lediglich eine im Folgenden noch beschrieben Schnittstelle, die einen temporären Zugriff auf den Schlüsselspeicher 1 durch die Zugriffseinrichtung 2 über ein weiteres Kabel 6 ermöglicht. Auch die Verbindung zwischen dem Schlüsselspeicher 1 und der Zugriffseinrichtung 2 kann alternativ eine kabellose Verbindung sein und/oder über ein Netzwerk erfolgen.

Die Zugriffseinrichtung 2 ist ein Computer, der einzelne geheime Schlüssel aus dem Schlüsselspeicher 1 benötigt, um kryptographische Operation durchführen zu können. Um die einzelnen geheimen Schlüssel zu erhalten, greift der Computer 2 auf den Schlüsselspeicher 1 zu.

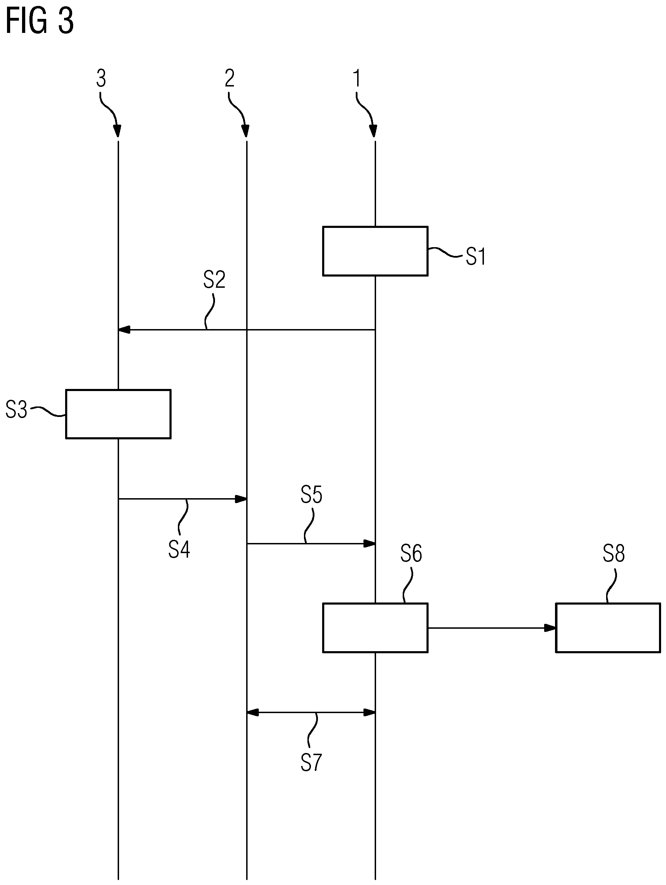

Der Zugriff auf den Schlüsselspeicher 1 erfolgt gemäß einem in der Fig. 3 dargestellten Verfahren zum Zugreifen auf eine geschützte Einrichtung mit einer Zugriffseinrichtung gemäß einer ersten Ausführungsform.

Im Folgenden wird der Zugriff des Computers 2 auf den Schlüsselspeicher 1 in Bezug auf die Fig. 1 bis 3 beschrieben, wobei die Fig. 2 den Schlüsselspeicher 1 zeigt.

Der in der Fig. 2 dargestellte Schlüsselspeicher 1 umfasst eine Erzeugungseinrichtung 11, eine Bereitstelleinrichtung 12, eine Empfangseinrichtung 13, eine Ermittlungseinrichtung 14, eine Zugriffsgestattungseinrichtung 15 und eine Speichereinrichtung 17, welche über einen internen Bus 16 miteinander verbunden sind.

In einem Schritt S1 erzeugt der Schlüsselspeicher 1 Zugriffsdaten Z. Die Zugriffsdaten Z werden mit Hilfe der Erzeugungseinrichtung 11 erzeugt, welche ein Pseudozufallszahlengenerator ist. Die erzeugten Zugriffsdaten Z sind somit als eine Pseudozufallszahl ausgebildet. Die Zugriffsdaten Z sind ab dem Zeitpunkt ihrer Erzeugung für einen vorbestimmten Zeitraum P gültig. Nach Ablauf des vorbestimmten Zeitraums P werden die Zugriffsdaten Z durch neue Zugriffsdaten ersetzt.

In einem Schritt S2 werden die Zugriffsdaten Z der Autorisierungseinrichtung 3 bereitgestellt. Hierzu verwendet der Schlüsselspeicher 1 die Bereitstelleinrichtung 12, welche ein Bildschirm ist. Die in dem Schritt S1 erzeugten Zugriffsdaten Z werden in dem Schritt S2 auf dem Bildschirm 12 angezeigt, und können manuell von einem Benutzer in die Autorisierungseinrichtung 3 eingegeben werden.

In einem Schritt S3 erzeugt die Autorisierungseinrichtung 3 Berechtigungsdaten. Die Zugriffsdaten Z werden in die Berechtigungsdaten eingebettet. Die Berechtigungsdaten werden zudem mit einer digitalen Signatur von der Autorisierungseinrichtung 3 signiert.

In einem Schritt S4 werden die Berechtigungsdaten von der Autorisierungseinrichtung 3 an den Computer 2 übertragen. Die Übertragung erfolgt über das Kabel 5.

In einem Schritt S5 werden die Berechtigungsdaten über das Kabel 6 von dem Computer 2 an den Schlüsselspeicher 1 übertragen. Der Schlüsselspeicher 1 empfängt die Berechtigungsdaten über die Empfangseinrichtung 13, welche eine Schnittstelle zum Zugreifen auf den Schlüsselspeicher 1 ausbildet.

In einem Schritt S6 ermittelt der Schlüsselspeicher 1 mit der Ermittlungseinrichtung 14, ob die mit den Berechtigungsdaten übermittelten Zugriffsdaten Z in dem Schlüsselspeicher 1 gültig sind. Hierbei überprüft die Ermittlungseinrichtung 14 zunächst, ob die digitale Signatur der Berechtigungsdaten gültig ist. Ferner prüft die Ermittlungseinrichtung 14, ob die in dem Schritt S5 erhaltene Zugriffsdaten Z im Hinblick auf den vorbestimmten Zeitraum P noch gültig sind. Das heißt, es wird überprüft, ob die Berechtigungsdaten vor Ablauf des vorbestimmten Zeitraums P erhalten werden. Zudem prüft die Ermittlungseinrichtung 14, ob die erhaltenen Zugriffsdaten tatsächlich mit den erzeugten Zugriffsdaten Z übereinstimmen. Falls die digitale Signatur gültig ist, falls die empfangenen Zugriffsdaten zeitlich noch gültig sind, und falls die empfangenen Zugriffsdaten mit den erzeugten Zugriffsdaten übereinstimmen, ermittelt die Ermittlungseinrichtung 14, dass die übermittelten Zugriffsdaten Z gültig sind.

Falls in dem Schritt S6 ermittelt wird, dass die mit den Berechtigungsdaten übermittelten Zugriffsdaten Z gültig sind, wird der Zugriff des Computers 2 auf den Schlüsselspeicher 1 zugelassen. In einem Schritt S7 greift der Computer 2 dann auf den Schlüsselspeicher 1 zu. Hierbei erhält der Computer 2 die benötigten einzelnen geheimen Schlüssel aus dem Schlüsselspeicher 1.

Ein Zugriff auf den Schlüsselspeicher 1 kann zeitlich limitiert erlaubt werden, obwohl der Schlüsselspeicher 1 nicht mit der Außenwelt verbunden ist. Die von der Autorisierungseinrichtung 3 erzeugten Berechtigungsdaten mit den Zugriffsdaten Z sind nur während des vorbestimmten Zeitraums P gültig.

Falls in dem Schritt S6 jedoch ermittelt wird, dass die mit den Berechtigungsdaten übermittelten Zugriffsdaten Z ungültig sind, wird der Zugriff des Computers 2 auf den Schlüsselspeicher 1 in einem Schritt S8 unterbunden. In dem Schritt S8 emittiert der Schlüsselspeicher 1 ferner ein Warnsignal, welches angibt, dass ein Zugriff auf den Schlüsselspeicher 1 nicht zugelassen werden kann.

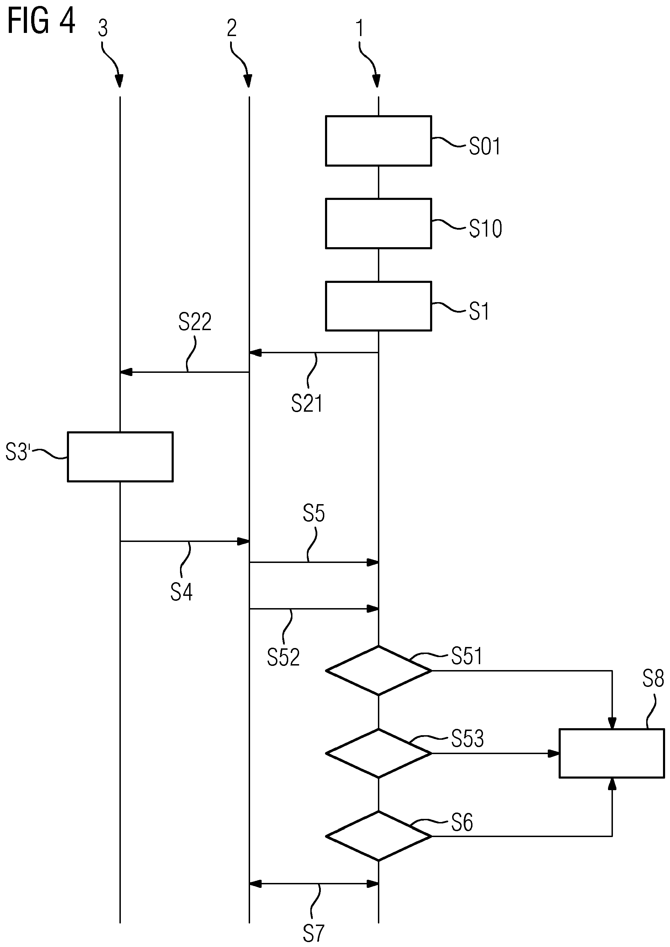

Die Fig. 4 zeigt ein Verfahren zum Zugreifen auf eine geschützte Einrichtung 1 mit einer Zugriffseinrichtung 2 gemäß einer zweiten Ausführungsform. Das in der Fig. 4 dargestellte Verfahren ist eine Erweiterung für das Verfahren aus der Fig. 3. Das in der Fig. 1 dargestellte System 4 kann das in der Fig. 4 dargestellte Verfahren durchführen.

In einem Schritt S01 wird in dem Schlüsselspeicher 1 eine Zulässigkeitsliste gespeichert. Die Zulässigkeitsliste enthält die URLs der Autorisierungseinrichtungen 3, die zulässige Berechtigungsdaten erstellen dürfen.

In einem Schritt S10 empfängt der Schlüsselspeicher 1 einen Erzeugungsbefehl zum Erzeugen von Zugriffsdaten Z. Der Erzeugungsbefehl wird durch Drücken eines in der Fig. 2 nicht dargestellten Knopfs des Schlüsselspeichers 1 durch einen Benutzer erzeugt. Dem Knopfdruck zufolge werden in dem Schritt S1 die Zugriffsdaten Z erzeugt.

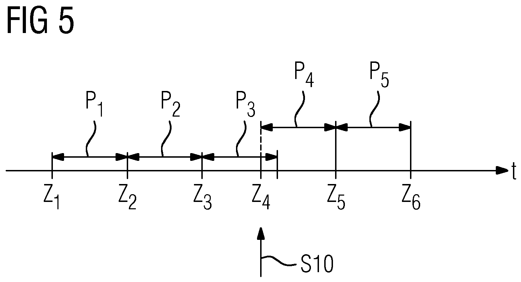

Das Erzeugen der Zugriffsdaten Z ist in der Fig. 5 schematisch dargestellt. Die Fig. 5 zeigt einen Zeitstrahl, der ein Erzeugen von Zugriffsdaten in dem Schlüsselspeicher 1 angibt. Der Pseudozufallszahlengenerator 11 erzeugt die Zugriffsdaten Z periodisch. Wie in der Fig. 5 dargestellt werden zunächst die Zugriffsdaten Z₁ erzeugt, die für einen Zeitraum P₁ gültig sind. Bei Ablauf des Zeitraums P₁ werden die Zugriffsdaten Z₁ durch neue Zugriffsdaten Z₂ ersetzt, welche für einen Zeitraum P₂ gültig sind, wobei P₁ = P₂. Bei Ablauf des Zeitraums P₂ werden dann die Zugriffsdaten Z₂ durch neue Zugriffsdaten Z₃ ersetzt, welche für einen Zeitraum P₃ gültig sind.

Vor Ablauf des Zeitraums P₃ erhält der Schlüsselspeicher 1 den Erzeugungsbefehl des Schritts S10 und erzeugt dann sofort neue Zugriffsdaten Z₄ und ersetzt die veralteten Zugriffsdaten Z₃. Die neuen Zugriffsdaten Z₄ sind dann wieder für einen Zeitraum P₄ gültig, bevor sie durch die Zugriffsdaten Z₅ ersetzt werden usw.

Wie in der Fig. 4 dargestellt, erzeugt die Erzeugungseinrichtung 11 in dem Schritt S1 neue Zugriffsdaten Z nach dem Empfang des Erzeugungsbefehls in dem Schritt S10.

In dem in der Fig. 4 dargestellten Verfahren ist der zuvor beschriebene Schritt S2 in zwei einzelne Schritte, nämlich S21 und S22, aufgeteilt. In dem Schritt S21 werden die Zugriffsdaten Z an den Computer 2 bereitgestellt. Hierzu liest ein Benutzer die erzeugten Zugriffsdaten Z von dem Bildschirm 12 ab und gibt diese in den Computer 2 ein.

In dem Schritt S22 sendet der Computer 2 eine Autorisierungsanfrage an die Autorisierungseinrichtung 3, welche die Zugriffsdaten Z und Zugriffseinrichtungsdaten umfassen. Die Zugriffseinrichtungsdaten enthalten eine Seriennummer des Computers 2.

In dem Schritt S3' erzeugt die Autorisierungseinrichtung 3 die Berechtigungsdaten. Der Schritt S3' unterscheidet sich von dem bereits beschriebenen Schritt S3 dadurch, dass die erzeugten Berechtigungsdaten ferner die Zugriffseinrichtungsdaten und eine URL der Autorisierungseinrichtung 3 umfassen.

In den bereits beschriebenen Schritten S4 und S5 werden die Berechtigungsdaten an den Computer 2 und anschließend an den Schlüsselspeicher 1 übertragen. In einem Schritt S52 überträgt der Computer 2 ferner Ausweisdaten an den Schlüsselspeicher 1, wobei die Ausweisdaten die Seriennummer des Computers 2 umfassen.

In einem Schritt S51 wird ermittelt, ob die Berechtigungsdaten von einer Autorisierungseinrichtung 3 aus der Zulässigkeitsliste erstellt wurden. Hierzu wird die URL der Autorisierungseinrichtung 3, die die Berechtigungsdaten erstellt hat, mit den URLs aus der Zulässigkeitsliste verglichen. Falls die URL der Autorisierungseinrichtung 3, die die Berechtigungsdaten erstellt hat, in der Zulässigkeitsliste vorliegt, wird bestimmt, dass die Berechtigungsdaten durch eine zulässige Autorisierungseinrichtung erstellt wurden.

In diesem Fall wird in einem Schritt S53 ermittelt, ob die in den Berechtigungsdaten erhaltenen Zugriffseinrichtungsdaten mit den Ausweisdaten übereinstimmen. Falls die Zugriffseinrichtungsdaten mit den Ausweisdaten übereinstimmten, wird der bereits beschriebene Schritt S6 durchgeführt.

Falls in dem bereits beschriebenen Schritt S6 ermittelt wird, dass die Zugriffsdaten Z, insbesondere im Hinblick auf den vorbestimmten Zeitraum, gültig sind, wird in dem Schritt S7 der Zugriff auf den Schlüsselspeicher 1 durch den Computer 2 zugelassen.

Falls in dem Schritt S51 jedoch bestimmt wird, dass die Berechtigungsdaten nicht durch eine zulässige Autorisierungseinrichtung 3 erstellt wurden, falls in dem Schritt S53 bestimmt wird, dass die in den Berechtigungsdaten erhaltenen Zugriffseinrichtungsdaten nicht mit den Ausweisdaten übereinstimmen, oder falls in dem Schritt S6 ermittelt wird, dass die Zugriffsdaten Z ungültig sind, wird der Schritt S8, in dem der Zugriff auf den Schlüsselspeicher 1 unterbunden wird, durchgeführt.

Obwohl die vorliegende Erfindung anhand von Ausführungsbeispielen beschrieben wurde, ist sie vielfältig modifizierbar. Zum Beispiel kann die Zugriffseinrichtung 2 statt eines Computers ein Techniker sein, der die geschützte Einrichtung 1 aktualisieren möchte. Die Autorisierungseinrichtung 3 kann zudem auch eine Firmenleitung sein, die Angestellten den Zugriff auf geschützte Einrichtungen 1 gewährt. Das Format der Zugriffsdaten und der Berechtigungsdaten ist beliebig modifizierbar. Die Berechtigungsdaten können z.B. verschlüsselt an die geschützte Einrichtung 1 übertragen werden. Die geschützte Einrichtung 1 kann auch über eine Netzwerkverbindung mit weiteren Einrichtungen verbunden sein.

## Patentansprüche

1. Verfahren zum Zugreifen auf eine geschützte Einrichtung (1) mit einer Zugriffseinrichtung (2), umfassend:
Erzeugen (S1) von Zugriffsdaten (Z) in der geschützten Einrichtung (1), wobei die Zugriffsdaten (Z) in der geschützten Einrichtung (1) für einen vorbestimmten Zeitraum (P) gültig sind, während der ein Zugriff der Zugriffseinrichtung (2) auf die geschützte Einrichtung (1) ermöglicht wird, falls die Zugriffseinrichtung (2) der geschützten Einrichtung (1) Berechtigungsdaten bereitstellt, die die Zugriffsdaten (Z) übermitteln;
Bereitstellen (S2) der Zugriffsdaten (Z) an eine Autorisierungseinrichtung (3);
Erstellen (S3) der Berechtigungsdaten zum Übermitteln der Zugriffsdaten (Z) durch die Autorisierungseinrichtung (3);
Übertragen (S4) der Berechtigungsdaten von der Autorisierungseinrichtung (3) an die Zugriffseinrichtung (2);
Übertragen (S5) der Berechtigungsdaten von der Zugriffseinrichtung (2) an die geschützte Einrichtung (1);
Ermitteln (S6), ob die mit den Berechtigungsdaten übermittelten Zugriffsdaten (Z) in der geschützten Einrichtung (1) gültig sind; und
Zugreifen (S7) auf die geschützte Einrichtung (1) mit der Zugriffseinrichtung (2), falls ermittelt wird, dass die mit den Berechtigungsdaten übermittelten Zugriffsdaten (Z) in der geschützten Einrichtung (1) gültig sind.

2. Verfahren nach Anspruch 1, wobei die Zugriffsdaten (Z) als eine Zufallszahl, insbesondere als eine echte Zufallszahl, ausgebildet sind.

3. Verfahren nach Anspruch 1 oder 2, wobei die geschützte Einrichtung (1) keine regelmäßige und/oder dauerhafte Verbindung zur Außenwelt, insbesondere keine Netzwerkverbindung, und/oder keinen Zugriff auf eine aktuelle Uhrzeit hat.

4. Verfahren nach einem der Ansprüche 1 bis 3, ferner umfassend:
Unterbinden (S8) des Zugriffs auf die geschützte Einrichtung (1) mit der Zugriffseinrichtung (2), falls ermittelt wird, dass die mit den Berechtigungsdaten übermittelten Zugriffsdaten (Z) in der geschützten Einrichtung (1) nicht mehr gültig sind.

5. Verfahren nach einem der Ansprüche 1 bis 4, welches ferner umfasst:
Signieren der Berechtigungsdaten beim Erstellen (S3) der Berechtigungsdaten durch die Autorisierungseinrichtung (3).

6. Verfahren nach einem der Ansprüche 1 bis 5, wobei die Berechtigungsdaten in einem asymmetrischen Signaturverfahren, in einem asymmetrischen Verschlüsselungsverfahren, in einem symmetrischen Nachrichtenauthentisierungsverfahren und/oder in einem symmetrischen Verschlüsselungsverfahren erstellt werden.

7. Verfahren nach einem der Ansprüche 1 bis 6, welches ferner umfasst:
periodisches Erzeugen der Zugriffsdaten in der geschützten Einrichtung (1).

8. Verfahren nach einem der Ansprüche 1 bis 7, welches ferner umfasst:
Erzeugen (S1) der Zugriffsdaten (Z) bei Empfang (S10) eines Erzeugungsbefehls in der geschützten Einrichtung (1).

9. Verfahren nach einem der Ansprüche 1 bis 8, welches ferner umfasst:
Übermitteln (S22) einer die Zugriffsdaten (Z) umfassenden Autorisierungsanfrage von der Zugriffseinrichtung (2) an die Autorisierungseinrichtung (3) zum Erstellen der Berechtigungsdaten.

10. Verfahren nach einem der Ansprüche 1 bis 9, wobei die Berechtigungsdaten Zugriffseinrichtungsdaten enthalten, die angeben, für welche Zugriffseinrichtung (2) die Berechtigungsdaten geeignet sind, und wobei das Verfahren ferner umfasst:
Übermitteln (S52) von Ausweisdaten der Zugriffseinrichtung (2) an die geschützte Einrichtung (1);
Ermitteln (S53), ob die Ausweisdaten mit den Zugriffseinrichtungsdaten übereinstimmen; und
falls ermittelt wird, dass die Ausweisdaten nicht mit den Zugriffseinrichtungsdaten übereinstimmen, Unterbinden (S8) des Zugriffs auf die geschützte Einrichtung (1) mit der Zugriffseinrichtung (2).

11. Verfahren nach einem der Ansprüche 1 bis 10, welches ferner umfasst:
Speichern (S01) einer Zulässigkeitsliste in der geschützten Einrichtung (1), die angibt, welche Autorisierungseinrichtungen für die geschützte Einrichtung (1) zulässige Berechtigungsdaten erstellen dürfen;
Ermitteln (S51) in der geschützten Einrichtung (1), ob die Berechtigungsdaten von einer Autorisierungseinrichtung aus der Zulässigkeitsliste erstellt wurden; und
Unterbinden (S8) des Zugriffs auf die geschützte Einrichtung (1) mit der Zugriffseinrichtung (2), falls ermittelt wird, dass die Berechtigungsdaten nicht von einer Autorisierungseinrichtung aus der Zulässigkeitsliste erstellt wurden.

12. Geschützte Einrichtung (1), umfassend:
eine Erzeugungseinrichtung (11) zum Erzeugen von Zugriffsdaten (Z), die in der geschützten Einrichtung (1) für einen vorbestimmten Zeitraum (P) gültig sind, während der ein Zugriff der Zugriffseinrichtung (2) auf die geschützte Einrichtung (1) ermöglicht wird, falls die Zugriffseinrichtung (2) der geschützten Einrichtung (1) Berechtigungsdaten bereitstellt, die die Zugriffsdaten (Z) übermitteln;
eine Bereitstelleinrichtung (12) zum Bereitstellen der Zugriffsdaten (Z);
eine Empfangseinrichtung (13) zum Empfangen der Berechtigungsdaten von der Zugriffseinrichtung (2);
eine Ermittlungseinrichtung (14) zum Ermitteln, ob die mit den Berechtigungsdaten übermittelten Zugriffsdaten (Z) in der geschützten Einrichtung (1) gültig sind; und
eine Zugriffsgestattungseinrichtung (15), die einen Zugriff auf die geschützte Einrichtung (1) durch die Zugriffseinrichtung (2) zulässt, falls die Ermittlungseinrichtung (14) ermittelt, dass die mit den Berechtigungsdaten übermittelten Zugriffsdaten (Z) in der geschützten Einrichtung (1) gültig sind.

13. System (4) zum Zugreifen auf die geschützte Einrichtung (1) nach Anspruch 12 mit einer Zugriffseinrichtung (2), wobei das System (4) die geschützte Einrichtung (1), die Zugriffseinrichtung (2) und die Autorisierungseinrichtung (3) umfasst,
wobei die Autorisierungseinrichtung (3) geeignet ist, die Berechtigungsdaten zu erzeugen; und
wobei die Zugriffseinrichtung (2) geeignet ist, die durch die Ausstellereinrichtung (3) erzeugten Berechtigungsdaten zu empfangen und an die geschützte Einrichtung (1) zu übertragen.

14. System nach Anspruch 13, welches geeignet ist, das Verfahren nach einem der Ansprüche 1 bis 11 durchzuführen.

15. Computerprogrammprodukt, welches auf einer programmgesteuerten Einrichtung die Durchführung des Verfahrens nach einem der Ansprüche 1 bis 11 veranlasst.
